# EUROPEAN PATENT APPLICATION

(11) **EP 4 361 864 A1**
(43) Date of publication of application: **01.05.2024**
(21) Application number: 22383030.8
(22) Date of filing: 25.10.2022
(51) Int. Cl.: G06F 21/60, G06F 21/64

(54) **PLATFORM AND METHOD FOR VALIDATING ELECTRONIC SIGNATURES IN SIGNED ELECTRONIC DOCUMENTS**

(71) Applicant: Lleidanetworks Serveis Telematics SL, 25003 Lleida (ES)
(72) Inventor: SAPENA SOLER, FRANCISCO, LLEIDA (ES)

(57) **Abstract**

The object of the invention is a method for the verification and validation of electronic signatures in electronic signed documents. This is crucial for admitting electronically files which comprise electronic signatures. Electronic contracts or electronic documents rendered as electronic files may be signed by a signature of a person or company that is different from the one stated in the contract, the signature may be expired at the time of signing or the signature was revoked when it was signed, generating invalidity of the contract, notice or document presented. Hence electronically signed files may be rendered invalid before any signature is applied since the electronic signatures were deemed to be invalid.

## Description

### OBJECT OF THE INVENTION

The object of the invention belongs to the field of communications more precisely to computer assisted verification processes.

The object of the invention allows to verify electronic signatures comprised in electronic documents, such as certificates, in a fast and secure manner.

### BACKGROUND OF THE INVENTION

Today the use of electronic signatures has become dizzyingly widespread, in part thanks to the covid epidemic that the entire humanity has suffered and has also been implemented throughout the world.

This implementation is generating a new problem, which is the subsequent verification of these electronic signatures, since nowadays so much trust is being placed in the electronic signature that simply its visualization already confirms that signature and unfortunately it is not like that.

A contract or a document may be signed by a signature of a person or company that is different from the one stated in the contract, the signature may be expired at the time of signing or the signature was revoked when it was signed, generating invalidity of the contract, notice or document presented.

Known processes are practically manual and industrial and simple methods are needed for verification and that in turn can be proven in court or in a regulator or simply before the citizen that the document is not valid, or the signer does not correspond with what is stated in the document signed electronically.

The invention object of this application provides a solution to the disadvantages by automating the entire process, generating proof of the verification date, of the document to be verified, of the verification summary in the sense of the validity or not of the signatures of the document and the specific verification process by a signature provider qualified in the verification of electronic signatures; packaging everything in a file signed electronically and with a time stamp.

### DESCRIPTION OF THE INVENTION

One aspect of the object of the invention is aimed at a method so that a telecommunications operator or an electronic communications provider (e- delivery provider) may verify and certify the electronic signature or signatures of electronic files received, such as electronic certificates, electronic contracts, or electronic notifications. These electronic signatures to be verified may be from any signature provider, generating proof of the entire transaction of the operation to, finally, generate an evidence document of the entire transaction.

In a second aspect of the invention the object of the invention encompasses a platform that is implemented by a telecommunications operator using a series of interconnected servers, so electronically signed files may have the signatures verified and or certified. In this way, the platform can present a configuration such that it implements:
- A server that implements a user management system (User Manager).
- An email management server with evidence collection that deals with the management of the process (Mailcert Server).
   Mailcert database server to deposit the files to be checked
- An issuing entity, preferably an electronic device with communication capabilities, computer, or smartphone.
- A electronic signatures verification server (QVal server).
- A time stamp server (TSU server).
- A server for generating evidence collected during the contracting process (TSA Server)
- A sender's mail server.
- An operator's mail server that manages mail services.

It should be noted that since the platform is linked to a telecommunications operator (or communications throughout this document), and preferably implemented in it, it allows certification tasks to be carried out without the need for network entities external to the operator. communications.

The foregoing and other advantages and features will be more fully understood from the following detailed description of exemplary embodiments with reference to the accompanying drawings, which should be considered by way of illustration and not limitation, in which:

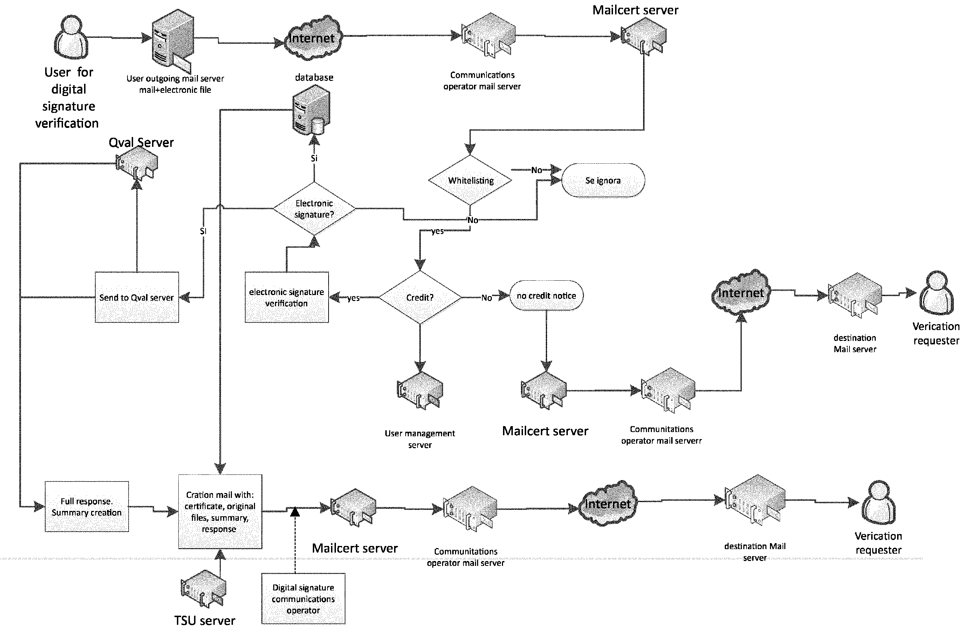

Figure 1 represents a flow chart of the method of the invention where all the feasible options are depicted therein.

### DETAILED DESCRIPTION

In a preferred embodiment of one aspect of the invention a system for verifying electronic signatures in signed electronic documents, hereinafter electronic documents, sent by an issuing entity, preferably an electronic device with communication capabilities, computer, or smartphone. is provided. Said platform comprises interconnected in a communications operator:
- A user manager server that implements a user management system (User Manager).
- An email management server with message data collection capabilities configured to deal with the management of certification processes such as message data collection processes (Mailcert Server).
- A database server configured to store electronic documents to be checked.
- An electronic signatures verification server (QVal server).
- A time stamp server (TSU server).
- A server for generating evidence collected during a contracting process (TSA Server)
- A sender's mail server.
- A communications operator mail server that manages mail services.

In a preferred embodiment of a second aspect of the invention, depicted in figure 1, a method for verifying electronic signatures in electronic documents is disclosed. In said preferred embodiment, the method for verifying electronic signatures in electronic documents comprises the following steps:
- A previously registered user sends an email to an address such as verify@certificado.Ileida.net attaching the electronic document/s with electronic signatures to be verified. This email address is managed by an email management server (Mailcert).
- The email with the electronic document/s arrives at a mail server of a verification entity that manages the electronic document verification service delivering the electronic document it to the Mailcert server upon reception.
- The Mailcert server may verify that the sender of the mail is registered on a whitelist of senders and that he has credit to be able to verify the files attached to the user management server.
- If the sender is not registered in the whitelist, the mail and any electronic document attached are ignored.
- The Mailcert server checks the presence/absence of at least one electronic signature in the electronic document. Should an electronic signature be found then it must be verified, hence said electronic signature may be stored in the database server before an electronic signature process is triggered.
- Next, either the electronic document or any electronic signature to be verified is sent to the electronic signature validation server preferably provided by a qualified signature validation server, namely the aforementioned QVal server, that will perform an electronic signature check process to check the electronic signature properties and validate the status of the signatures for example: whether it is valid or not, whether it is expired or not, whether it is invalidated or not, if it is repealed or not, or if it is in any of the possible states of the signature, as well as the data of the signatory, electronic signature provider issuing the electronic signature and any data they contain that may be of interest.

The Mailcert server will collect outputs from the Qval server for all the possible verifications of the signature(s) presented to compose an optional summary of the signature verification to make reading faster and more user friendly for the non-technical user.

Finally, the Mailcert server composes an electronic file, such a PDF file, in which it is certified that the electronic document file has been received from the user on such a day and time that contained one or more electronically signed files to be verified, that the verification of the file or file has had as a result that the electronic signatures contained in the file are valid or not and the number of signatures contained in the file, attaching to the electronic file:
∘ The output of the QVal server.
∘ The electronic document received which electronic signatures were meant to be verified which was deposited in the original file server.

The electronic file generated may be PDF file which is then electronically signed with the communications operator digital signature and a time stamp may be added.

The result is a signed and non-tampering file containing all the evidence and content of any actions carried out at the communications operator, the summary of the result of the verification and the complete verification.

In an alternative embodiment of the invention the signed electronic document may be compared to an original electronic document, said original electronic document lacking signatures so electronic signatures may be identified and extracted, in this case both the original and the signed electronic document will be included in the electronic file before the latter is digitally signed by the communications operator and the optional timestamp is applied.

## Claims

1. A method for verifying electronic signatures in electronically signed electronic files, **characterized by** comprising:
a. an email management server (Mailcert server) checking the presence of at least one electronic signature in the digitally signed electronic file
b. store the electronically signed electronic and deposit a copy of said electronically signed electronic in the database server of files to verify,
c. extracting the electronic signatures from the electronic files,
d. verifying the electronic signature to a qualified signature validation server (QVal),
e. the email management server (Mailcert server) will collect the result of the qualified signature validation server (QVal) for all the possible verifications of the electronic signature presented,
f. the email management server (Mailcert server) composing a certification file in which the communications operator certifies that a file has been received from a user on such a day and time that contained one or more electronically signed files to be verified, that the verification of the file or file has had as a result that the electronic signatures contained in the file are valid or not and the number of signatures contained in the file,
g. adding to the electronic file:
i. the result of the qualified signature validation server (QVal), and
ii. the electronically signed electronic file which electronic signature was to be verified, and
h. signing the electronic file with the communications operator and
i. adding a time stamp is added to the signed electronic file resulting from the previous step.

2. The method of claim 1 wherein the verification comprises verifying status of the signatures, whether it is valid or not, whether it is expired or not, whether it is invalidated or not, if it is repealed or not, or if it is in any of the possible states of the signature, as well as the data of the signatory, the signature provider and any data they contain that may be of interest.

3. The method of claim 1 further comprising the email management server (Mailcert server) composing a summary of the signature verification to make reading faster and more user friendly for the non-technical user.
